# EUROPEAN PATENT SPECIFICATION

(11) **EP 3 226 152 B1**
(45) Date of publication and mention of the grant of the patent: **15.07.2020**
(21) Application number: 15871733.0
(22) Date of filing: 16.09.2015
(51) Int. Cl.: G06F 16/22, G06F 16/2455

(54) **SERVICE DATA QUERY METHOD AND APPARATUS AND DATABASE SYSTEM**
VERFAHREN UND VORRICHTUNG ZUR ABFRAGE VON SERVICEDATEN UND DATENBANKSYSTEM
PROCÉDÉ D'INTERROGATION DE DONNÉES DE SERVICE, APPAREIL ET SYSTÈME DE BASE DE DONNÉES

(30) Priority: 22.12.2014 CN 201410804281
(43) Date of publication of application: 04.10.2017
(73) Proprietor: Huawei Technologies Co. Ltd., Shenzhen, Guangdong 518129 (CN)
(72) Inventor: JIN, Zhongliang, Shenzhen Guangdong 518129 (CN)
(74) Representative: Pfenning, Meinig & Partner mbB
(86) International application number: PCT/CN2015/089802
(87) International publication number: WO 2016/101659

(56) References cited:
- CN-A- 101 840 430
- CN-A- 103 226 610
- CN-A- 104 090 987
- CN-A- 104 537 030
- US-A1- 2014 172 776
- US-A1- 2014 281 247
- Hasso Plattner ET AL: "The Technical Foundations of SanssouciDB" In: "In-Memory Data Management: Technology and Applications", 17 April 2012 (2012-04-17), Springer, Berlin, XP055415252, ISBN: 978-3-642-29575-1 pages 39-96, * page 72, last paragraph - page 73, paragraph first * * figure 4.20 *
- John Wang: "Relational Data Access for Business Data Analytics" In: "Encyclopedia of Business Analytics and Optimization", 28 February 2014 (2014-02-28), IGI Global, Hershey, PA, USA, XP055415477, ISBN: 978-1-4666-5202-6 page 2023, * page 2023 *

## Description

### TECHNICAL FIELD

The present invention relates to the field of database technologies, and in particular, to a method and an apparatus for querying service data, and a database system.

### BACKGROUND

Business intelligence (BI) is also referred to as business wisdom, a BI database can effectively execute an operation, such as querying, analyzing, and multidimensional presentation, on service data by using such excellent technologies of the BI database as a database technology, online analytical processing (OLAP), and data mining, so as to help an enterprise to make a wise business operation decision. In an actual application, a BI database generally stores data in a column manner (that is, a columnar database), and therefore can meet a quick data query requirement of an analytical service that is based on a rule. However, for data of a transactional service that is based on event triggering, a query requirement of an excessively high throughput generally needs to be met, and therefore, data needs to be stored in a BI database in a row manner (that is, a row database). Apparently, the BI database that stores data in the column manner cannot meet a data query requirement of a transactional service. Document (US 2014/281247 A1) discloses a method for accelerating queries using dynamically generated columnar data in a flash cache.

### SUMMARY

The invention is set out in the appended claims. Embodiments of the present invention disclose a method and an apparatus for querying service data, and a database system, which can meet a data query requirement of a transactional service.

A first aspect of the embodiments of the present invention discloses a method for querying service data, where a database memory includes a column buffer and a row buffer, where a column of the column buffer is used to load column data of a database, a row of the row buffer is used to load column data of the column buffer or the column data of the database, and the method includes:
receiving (401) a transactional service data query request that is sent by a transactional service system and that comprises a target column identifier and a first query condition,
detecting (401) whether a row index corresponding to the target column identifier exists; and
if the row index corresponding to the target column identifier exists, querying, based on the first query condition, column data that corresponds to the target column identifier, and that is in a row in the row buffer and corresponds to the row index, to obtain a query result; and returning (407) the result to the transactional service system;
if the row index corresponding to the target column identifier does not exist, detecting (402) whether the column data corresponding to the target column identifier is loaded in the column buffer, and if the column data corresponding to the target column identifier is loaded in the column buffer, reading (403) the column data corresponding to the target column identifier from the column buffer; if the column data corresponding to the target column identifier is not loaded in the column buffer, reading (404) the column data corresponding to the target column identifier from the database; loading (405) the read column data corresponding to the target column identifier to a row in the row buffer; and
establishing (406) a correspondence between the target column identifier and a row index of the row, and querying, based on the first query condition, the row in the row buffer containing the column data, to obtain a query result; and returning (407) the result to the transactional service system;
wherein the row buffer comprises several sub-buffers, each sub-buffer comprises several rows having a same length, the sub-buffers have a same quantity of rows, and for each i between 1 and the quantity of rows in a sub-buffer, the i^{th} row in a sub-buffer shares a same row index with the i^{th} row in every other sub-buffer; and the loading the read column data corresponding to the target column identifier to a row in the row buffer comprises:
   dividing, according to the quantity of the rows of the sub-buffer in the row buffer, the read column data corresponding to the target column identifier, and loading one by one each partial column data obtained by means of division to a same location of each row comprised in any one of the sub-buffers.

When receiving an analytical service data query request that is sent by an analytical service system and that includes a specified column identifier and a second query condition, detecting whether column data corresponding to the specified column identifier is loaded in the column buffer, and if yes, querying, based on the second query condition, the column data that is corresponding to the specified column identifier and that is in the column buffer, to obtain a query result, and returning the result to the analytical service system.

If the column data corresponding to the specified column identifier is not loaded in the column buffer, the method further includes:
reading the column data corresponding to the specified column identifier from the database; and
loading the read column data corresponding to the specified column identifier to a column of the column buffer, and performing the step of querying, based on the second query condition, the column data corresponding to the specified column identifier from the column buffer, to obtain a query result; and returning the result to the analytical service system.

An apparatus for querying service data, comprising:
a transceiver;
a database and a database memory comprising a column buffer and a row buffer,
one or more processors; and
non-transitory computer-readable memory storing a program to be executed by
   the one or more processors for performing the above method claims.

In the embodiments of the present invention, a database memory not only includes a column buffer used to load column data of a database, but also includes a row buffer used to load column data of the column buffer or the column data of the database. In this way, when a transactional service data query request that is sent by a transactional service system and that includes a target column identifier and a first query condition is received, if it is detected that a row index corresponding to the target column identifier exists, column data that corresponds to the target column identifier, and that is in a row that is in the row buffer and corresponds to the row index may be directly queried based on the first query condition, to obtain a query result and the result is returned to the transactional service system, so that data of a transactional service can be queried in a database that stores data in a column manner. In addition, in the embodiments of the present invention, it is unnecessary to create two sets of databases for an analytical service and a transactional service, and maintenance of data synchronization between the two sets of databases can be omitted when the two sets of databases are used, reducing difficulty in maintenance of a database. In addition, database system complexity can also be effectively reduced in a manner of not using two sets of databases.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic diagram of a network architecture for querying service data according to an embodiment of the present invention;
FIG. 2 is a schematic structural diagram of an apparatus for querying service data according to an embodiment of the present invention;
FIG. 3 is a schematic flowchart of a method for querying service data according to an embodiment of the present invention;
FIG. 4A and FIG. 4B are schematic flowcharts of another method for querying service data according to an embodiment of the present invention;
FIG. 5 is a schematic structural diagram of an apparatus for querying service data according to an embodiment of the present invention;
FIG. 6 is a schematic structural diagram of another apparatus for querying service data according to an embodiment of the present invention;
FIG. 7 is a schematic structural diagram of still another apparatus for querying service data according to an embodiment of the present invention; and
FIG. 8 is a schematic structural diagram of a database system according to an embodiment of the present invention.

### DESCRIPTION OF EMBODIMENTS

The following clearly describes the technical solutions in the embodiments of the present invention with reference to the accompanying drawings in the embodiments of the present invention. Apparently, the described embodiments are merely a part rather than all of the embodiments of the present invention.

The embodiments of the present invention disclose a method and an apparatus for querying service data, and a database system, so that data of a transactional service can be queried in a database that stores data in a column manner. In addition, it is unnecessary to create two sets of databases for an analytical service and a transactional service, and maintenance of data synchronization between the two sets of databases can be omitted when the two sets of databases are used, reducing difficulty in maintenance of a database. In addition, database system complexity can also be effectively reduced in a manner of not using two sets of databases. Details are separately described below.

To better understand the embodiments of the present invention, a network architecture for querying service data disclosed in an embodiment of the present invention is first described below.

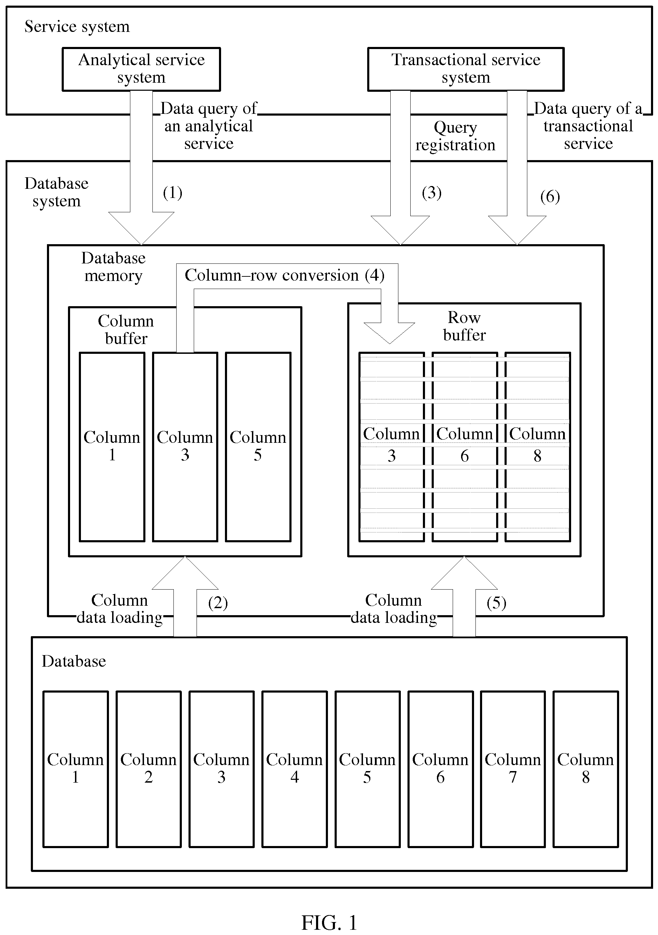

Referring to FIG. 1, FIG. 1 is a schematic diagram of a network architecture for querying service data according to an embodiment of the present invention. As shown in FIG. 1, the network architecture for querying service data may include a service system and a BI database system, where the service system may include an analytical service system and a transactional service system, the analytical service system is also referred to as an online analytical processing (OLAP) system in the art, and the transactional service system is also referred to as an online transaction processing (OLTP) in the art. The database system may include a database, and a column buffer and a row buffer that are pre-created for the database and that are located in a database memory. In this embodiment of the present invention, the database may include a BI database (also referred to as a BI data warehouse in the art) storing data in a column manner or another database, for example, a VFP, a dBASE, an oracle, and an SQL storing data in a column manner. This is not limited in this embodiment of the present invention.

The analytical service system is mainly used to query data of an analytical service, and the data query of an analytical service generally needs to meet a requirement of quick query, and requires data to be stored in a column manner. However, the transactional service system is mainly used to query data of a transactional service, and the data query of a transactional service generally needs to meet a query requirement of an excessively high throughput, and requires data to be stored in a row manner. The data query of an analytical service generally refers to query operations such as filtering and segment statistics collection performed on data based on a condition defined by a user, to help the user to study a pattern of the data, so that a user behavior feature may be explored, providing a basis for specifying a market strategy and a marketing principle. The data query of a transactional service refers to that when an event of a user happens (for example, arriving at a predefined region, dialing a predefined number, or visiting a web page that meets a predefined rule), a suitable response feature may be provided. As shown in FIG. 1, column data, such as a column 1 to a column 8, may be stored in the database, the column buffer may store column data (for example, the column 1, the column 3, and the column 5) by using a column storage architecture, and is mainly applicable to a fast query. The row buffer stores column data (for example, the column 3, the column 6, and the column 8) by using a row storage architecture, and is mainly applicable to a query of an excessively high throughput.

In the network architecture for querying service data shown in FIG. 1, a process of operations for querying service data may include the following steps:
(1) When a data query of an analytical service is executed, the analytical service system sends an analytical service data query request including a specified column identifier and a second query condition to the database system, and the database system may directly detect whether column data corresponding to the specified column identifier is loaded in the column buffer of the database memory, and if yes, query the column data corresponding to the specified column identifier from the column buffer based on the second query condition, to obtain a query result; and return the result to the analytical service system.
(2) When the database system detects that the column data corresponding to the specified column identifier is not loaded in a column buffer of the database memory, the database system may read the column data corresponding to the specified column identifier from the database, and load the read column data corresponding to the specified column identifier to a column of the column buffer. Based on this, the database system may query the column data corresponding to the specified column identifier from the column buffer based on the second query condition, to obtain a query result; and return the result to the analytical service system. If necessary, the database system may remove column data that is not used for the longest time from the column buffer.
(3) When a query registration request is executed, the transactional service system may send the query registration request including a target column identifier to the database system, the database system may detect whether a row index corresponding to the target column identifier exists, and if yes, it indicates that column data corresponding to the target column identifier is already loaded in the row buffer.
(4) If the database system detects that the row index corresponding to the target column identifier does not exist, it indicates that the column data corresponding to the target column identifier is not loaded in the row buffer. Further, the database system may detect whether the column data corresponding to the target column identifier is loaded in the column buffer, and if it is detected that the column data corresponding to the target column identifier is loaded in the column buffer, the database system may read the column data corresponding to the target column identifier from the column buffer, and load the read column data corresponding to the target column identifier to a row in the row buffer (that is, column-to-row conversion storage). Further, the database system may establish a correspondence between the target column identifier and a row index of the row (that is, the row, to which the column data corresponding to the target column identifier is loaded, in the row buffer), so as to detect, according to the correspondence, whether the row index corresponding to the target column identifier exists next time.
(5) When the database system detects that the column data corresponding to the target column identifier is not loaded in the column buffer, the database system may read the column data corresponding to the target column identifier from the database, and load the read column data corresponding to the target column identifier to a row in the row buffer (that is, column-to-row conversion storage). Further, the database system may establish a correspondence between the target column identifier and a row index of the row (that is, the row, to which the column data corresponding to the target column identifier is loaded, in the row buffer), so as to detect, according to the correspondence, whether the row index corresponding to the target column identifier exists next time.
(6) When a transactional service data query request is executed, the transactional service system may send the transactional service data query request including a target column identifier and a first query condition to the database system, and correspondingly, the database system may detect whether a row index corresponding to the target column identifier exists, and if yes, query, based on the first query condition, column data that corresponds to the target column identifier, and that is in a row that is in the row buffer of the database memory and corresponds to the row index, to obtain a query result; and return the result to the transactional service system.

When step 1) to step 6) are implemented, data of a transactional service can be queried in a database that stores data in a column manner. In addition, it is unnecessary to create two sets of databases for an analytical service and a transactional service, and maintenance of data synchronization between the two sets of databases can be omitted when the two sets of databases are used, reducing difficulty in maintenance of a database. In addition, database system complexity can also be effectively reduced in a manner of not using two sets of databases.

In the network architecture for querying service data shown in FIG. 1, in the row buffer of the database memory, the row buffer may be formatted into several rows, and lengths of the rows are the same (the length is expressed in bytes). In this case, no column data is stored in the row buffer. For example, when the row buffer is formatted into three rows having a same length, after some column data is loaded to rows of the row buffer, a structure of the row buffer may be shown in Table 1 below:

**Table 1**

| | | | | | |
|---|---|---|---|---|---|
| Column 1 | Column 2 | Column 3 | Column 4 | Column 5 | |
| Column 1 | Column 2 | Column 3 | Column 4 | Column 5 | |
| Column 1 | Column 2 | Column 3 | Column 4 | Column 5 | |

As shown in Table 1, the database system may divide data of the column 1 according to a quantity of rows (that is, three rows) in the row buffer, to obtain each partial data, which has a fixed length, of the column 1, and load one by one each partial data of the column 1 that is obtained by means of division to a same location of each row of the row buffer (that is, implementing column-to-row conversion of the data of the column 1). The database system may divide data of the column 2 according to the quantity of the rows (that is, three rows) in the row buffer, to obtain each partial data, which has a fixed length, of the column 2, and load one by one each partial data of the column 2 that is obtained by means of division to a same location of each row in the row buffer (that is, implementing column-to-row conversion of the data of the column 2).... The database system may divide data of the column 5 according to the quantity of the rows (that is, three rows) in the row buffer, to obtain each partial data, which has a fixed length, of the column 5, and load one by one each partial data of the column 5 that is obtained by means of division to a same location of each row in the row buffer (that is, implementing column-to-row conversion of data of the column 5).

In this embodiment of the present invention, for example, it may be learned from Table 1 that, each partial data of the column 1 into which the data of the column 1 is divided has a same length, and each partial data of the column 1 into which the data of the column 1 is divided is in the same location in each row of the row buffer. Each partial data of the column 2 into which the data of the column 2 is divided has a same length, and each partial data of the column 2 into which the data of the column 2 is divided is in the same location in each row of row buffer. The length of each partial data of the column 1 and the length of each partial data of the column 2 may be different, that is, lengths into which different column data is divided may be different, but lengths or storage locations of a same piece of column data are the same in different rows.

In this embodiment of the present invention, using the structure of the row buffer shown in Table 1 as an example, partial column data in the row buffer may be removed from the row buffer by the database system because the partial column data are not used for a long time and the like, and new column data may continue to be loaded to the row buffer by the database system. In this case, for example, the structure of the row buffer may be shown in Table 2 below:

**Table 2**

| | | | | | | | | |
|---|---|---|---|---|---|---|---|---|
| Colum n 1 | | Colu mn 3 | Colu mn 4 | Colu mn 5 | Colu mn 6 | Colu mn 7 | Colu mn 8 | |
| Colum n 1 | | Colu mn 3 | Colu mn 4 | Colu mn 5 | Colu mn 6 | Colu mn 7 | Colu mn 8 | |
| Colum n 1 | | Colu mn 3 | Colu mn 4 | Colu mn 5 | Colu mn 6 | Colu mn 7 | Colu mn 8 | |

As shown in Table 2, assuming that the data of the column 2 is not used for a long time, the database system may remove the data of the column 2 from the row buffer, and data of the column 6 to data of the column 8 are used as new column data and may be loaded to the row buffer by the database system.

In this embodiment of the present invention, locations of rows that are occupied by partial column data removed from the row buffer by the database system may be reused, to load new column data. Using the structure of the row buffer shown in Table 2 as an example, after the database system removes the data of the column 2 from the row buffer, locations of rows that are occupied by the data of the column 2 may be reused, to load data of a column 9, and in this case, the structure of the row buffer may be shown in Table 3 below:

**Table 3**

| | | | | | | | | |
|---|---|---|---|---|---|---|---|---|
| Colu mn 1 | Colu mn 9 | Colu mn 3 | Colu mn 4 | Colu mn 5 | Colu mn 6 | Colu mn 7 | Colu mn 8 | |
| Colu mn 1 | Colu mn 9 | Colu mn 3 | Colu mn 4 | Colu mn 5 | Colu mn 6 | Colu mn 7 | Colu mn 8 | |
| Colu mn 1 | Colu mn 9 | Colu mn 3 | Colu mn 4 | Colu mn 5 | Colu mn 6 | Colu mn 7 | Colu mn 8 | |

In this embodiment of the present invention, when a row of the row buffer does not have loadable space, the database system may create several sub-buffers for the row buffer, where each sub-buffer includes several rows having a same length, the sub-buffers have a same quantity of rows, and rows of a same rank in the several sub-buffers share a same row index, that is, the rows of a same rank in the several sub-buffers belong to a same row. As shown in Table 4 and Table 5, Table 4 and Table 5 are two sub-buffers created by the database system for the row buffer, where both of the sub-buffers shown in Table 4 and Table 5 include three rows, a first row in the sub-buffer in Table 4 and a first row in the sub-buffer in Table 5 belong to a same row, a second row in the sub-buffer in Table 4 and a second row in the sub-buffer in Table 5 belong to a same row, and a third row in the sub-buffer in Table 4 and a third row in the sub-buffer in Table 5 belong to a same row.

**Table 4**

| | | | | | | | | | |
|---|---|---|---|---|---|---|---|---|---|
| Col umn 1 | Col umn 9 | Col umn 3 | Col umn 4 | Col umn 5 | Col umn 6 | Col umn 7 | Col umn 8 | Col umn 10 | |
| Col umn 1 | Col umn 9 | Col umn 3 | Col umn 4 | Col umn 5 | Col umn 6 | Col umn 7 | Col umn 8 | Col umn 10 | |
| Col umn 1 | Col umn 9 | Col umn 3 | Col umn 4 | Col umn 5 | Col umn 6 | Col umn 7 | Col umn 8 | Col umn 10 | |

**Table 5**

| | | | |
|---|---|---|---|
| Column 11 | Column 12 | Column 13 | |
| Column 11 | Column 12 | Column 13 | |
| Column 11 | Column 12 | Column 13 | |

For example, as shown in Table 4, data of the column 1 is divided into three pieces of partial data, which has a same length, of the column 1, and the three pieces of partial data of the column 1 into which the data of the column 1 is divided are loaded one by one to a same location of each row included in the sub-buffer shown in the Table 4. As shown in Table 5, data of the column 12 is divided into three pieces of partial data, which has a same length, of the column 12, and the three pieces of partial data of the column 12 into which the data of the column 12 is divided are loaded one by one to a same location of each row included in the sub-buffer shown in Table 5.

In this embodiment of the present invention, when there is a relatively large quantity of sub-buffers in the row buffer, the database system may execute combination of the sub-buffers and increase the length of the row of the row buffer, as shown in Table 6:

**Table 6**

| | | | | | | | | |
|---|---|---|---|---|---|---|---|---|
| Colu mn 1 | Colu mn 9 | Colu mn 3 | Colu mn 4 | Colu mn 5 | Colu mn 6 | ... | Colu mn n | |
| Colu mn 1 | Colu mn 9 | Colu mn 3 | Colu mn 4 | Colu mn 5 | Colu mn 6 | ... | Colu mn n | |
| Colu mn 1 | Colu mn 9 | Colu mn 3 | Colu mn 4 | Colu mn 5 | Colu mn 6 | ... | Colu mn n | |

In this embodiment of the present invention, some column data whose length cannot be fixed cannot be directly loaded to the row buffer, and in this case, the database system may add a location having a fixed length to a same location of each row in the row buffer to store index information (that is, a starting storage location of each column data) of the column data whose length cannot be fixed, and then store the column data whose length cannot be fixed to the column buffer. In this case, when the column data is queried, the column data may be positioned quickly from the column buffer according to the index information of the column data.

In this embodiment of the present invention, in the network architecture for querying service data shown in FIG. 1, data of a transactional service can be queried in a database that stores data in a column manner. In addition, it is unnecessary to create two sets of databases for an analytical service and a transactional service, and maintenance of data synchronization between the two sets of databases can be omitted when the two sets of databases are used, reducing difficulty in maintenance of a database. In addition, database system complexity can also be effectively reduced in a manner of not using two sets of databases.

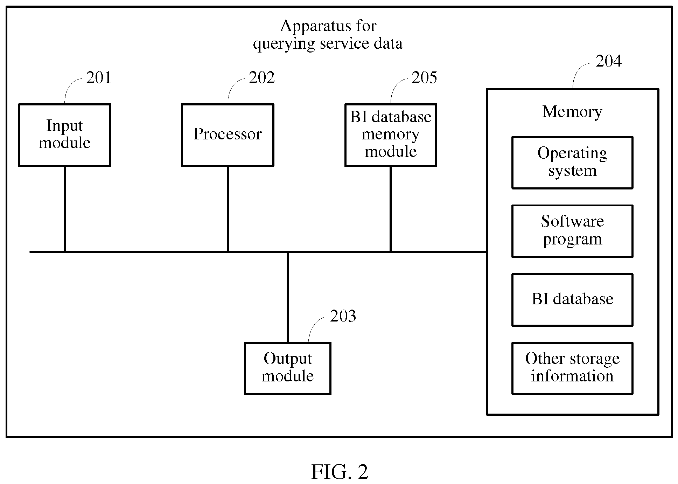

Referring to FIG. 2, FIG. 2 is a schematic structural diagram of an apparatus for querying service data according to an embodiment of the present invention. The apparatus for querying service data described in FIG. 2 may be configured to perform a function of the database system described above. In this embodiment of the present invention, the apparatus for querying service data described in FIG. 2 may be a database system in a physical form. In this embodiment of the present invention, description is made by using an example in which a database is a BI database, and when the database is a database of another type, an implementation of this embodiment of the present invention is not affected. As shown in FIG. 2, the apparatus for querying service data may include components, such as an input module 201, a processor 202, an output module 203, a memory 204, and a BI database memory module 205. These components may communicate by using one or more communications buses. A person skilled in the art may understand that, a structure of the apparatus for querying service data shown in FIG. 2 sets no limitation on the present invention, and the structure may be a bus-shaped structure, or may be a star-shaped structure, or may include more or fewer components than those described in FIG. 2, or some components may be combined, or different component arrangements may be used.

In this embodiment of the present invention, the input module 201 may be a wired or wireless receiver, and is configured to receive a service data query request sent by a service system (for example, an analytical service system and a transactional service system), and output the request to the processor 202. The output module 203 may be a wired or wireless transmitter, and is configured to send the service data found by the processor 202 to the service system.

In this embodiment of the present invention, the memory 204 may be a high-speed RAM memory, or a non-volatile memory (non-volatile memory), for example, at least one magnetic disk storage. Optionally, the memory 204 may further be at least one storage apparatus that is located far away from the processor 202. As shown in FIG. 2, the memory 204 as a computer physical storage medium may include an operating system, a software program, a BI database, and other storage information. This is not limited in this embodiment of the present invention.

In this embodiment of the present invention, the BI database memory module 205 is used as a buffer located between a BI database and an external interface, and may be configured to create a column buffer and a row buffer, where the column buffer stores column data by using a column storage architecture, and is mainly applicable to a fast query; and the row buffer stores column data by using a row storage architecture, and is mainly applicable to a query of an excessively high throughput.

In the apparatus for querying service data shown in FIG. 2, the processor 202 may be configured to invoke the software program stored in the memory 204 to execute the following operations:
when receiving, by using an inputting module 201, a transactional service data query request that is sent by a transactional service system and that includes a target column identifier and a first query condition, detecting whether a row index corresponding to the target column identifier exists in the memory 204, and if yes, querying, based on the first query condition, column data that corresponds to the target column identifier, and that is in a row that is in the row buffer of the BI database memory module 205 and corresponds to the row index, to obtain a query result; and returning the result to the transactional service system by using the output module 203, where the column data corresponding to the target column identifier is loaded in advance to a row of the row buffer from a BI database or the column buffer; and
when receiving, by using an inputting module 201, an analytical service data query request that is sent by an analytical service system and that includes a specified column identifier and a second query condition, detecting whether column data corresponding to the specified column identifier is loaded in the column buffer in the BI database memory module 205, and if yes, querying, based on the second query condition, the column data corresponding to the specified column identifier from the column buffer, to obtain a query result; and returning the result to the analytical service system by using the output module 203, where the column data corresponding to the specified column identifier is loaded in advance to a column of the column buffer from the BI database.

As an optional implementation manner, the processor 202 may further invoke the software program stored in the memory 204, to execute the following operations:
if detecting that the column data corresponding to the specified column identifier is not loaded in the column buffer of the BI database memory module 205, reading the column data corresponding to the specified column identifier from the BI database; and
loading the read column data corresponding to the specified column identifier to a column of the column buffer.

As an optional implementation manner, the processor 202 may further invoke the software program stored in the memory 204, to execute the following operations:
if detecting that the row index corresponding to the target column identifier does not exist in the memory 204, detecting whether the column data corresponding to the target column identifier is loaded in the column buffer, and if the column data corresponding to the target column identifier is loaded in the column buffer, reading the column data corresponding to the target column identifier from the column buffer; or if the column data corresponding to the target column identifier is not loaded in the column buffer, reading the column data corresponding to the target column identifier from the BI database;
loading the read column data corresponding to the target column identifier to a row in the row buffer; and
establishing a correspondence between the target column identifier and a row index of the row (that is, the row, to which the column data corresponding to the target column identifier is loaded, in the row buffer), storing the correspondence in the memory 204, and executing the operation of querying, based on the first query condition, column data that corresponds to the target column identifier, and that is in a row that is in the row buffer of the BI database memory module 205 and corresponds to the row index, to obtain a query result; and returning the result to the transactional service system by using the output module 203.

As an optional implementation manner, the processor 202 may further invoke the software program stored in the memory 204, to execute the following operations:
before receiving, by using the inputting module 201, the transactional service data query request that is sent by the transactional service system and that includes the target column identifier and the first query condition, if a query registration request that is sent by the transactional service system and that includes the target column identifier is received by using the inputting module 201, detecting whether the column data corresponding to the target column identifier is loaded in the row buffer of the BI database memory module 205, if the column data corresponding to the target column identifier is not loaded in the row buffer, detecting whether the column data corresponding to the target column identifier is loaded in the column buffer, and if the column data corresponding to the target column identifier is loaded in the column buffer, reading the column data corresponding to the target column identifier from the column buffer, or if the column data corresponding to the target column identifier is not loaded in the column buffer, reading the column data corresponding to the target column identifier from the BI database;
loading the read column data corresponding to the target column identifier to a row in the row buffer; and
establishing a correspondence between the target column identifier and a row index of the row (that is, the row, to which the column data corresponding to the target column identifier is loaded, in the row buffer), storing the correspondence in the memory 204, and executing the operation of querying, based on the first query condition, column data that corresponds to the target column identifier, and that is in a row that is in the row buffer of the BI database memory module 205 and corresponds to the row index, to obtain a query result; and returning the result to the transactional service system by using the output module 203.

In an embodiment, the row buffer may include several sub-buffers, each sub-buffer includes several rows having a same length, the sub-buffers have a same quantity of rows, and rows of a same rank in the several sub-buffers share a same row index, that is, the rows of a same rank in the several sub-buffers belong to a same row; and correspondingly, a manner in which the processor 202 loads the read column data corresponding to the target column identifier to the buffer row in the row buffer may be specifically:
dividing, according to the quantity of the rows of the sub-buffer in the row buffer, the read column data corresponding to the target column identifier, and loading one by one each partial column data obtained by means of division to a same location of each row included in any one of the sub-buffers.

In an embodiment, a manner in which the processor 202 queries, based on the first query condition, the column data that corresponds to the target column identifier, and that is in the row that is in the row buffer of the BI database memory and corresponds to the row index, to obtain the query result is specifically:
determining each row that is in the row buffer of the BI database memory and corresponds to the row index and that is located in any one of the sub-buffers; and
querying, based on the first query condition, partial column data that corresponds to the target column identifier, and that is loaded in a same location in each row that is located in any one of the sub-buffers and corresponds to the row index, to obtain the query result.

In this embodiment of the present invention, in the apparatus for querying service data shown in FIG. 2, data of a transactional service can be queried in a BI database that stores data in a column manner. In addition, it is unnecessary to create two sets of BI databases for an analytical service and a transactional service, and maintenance of data synchronization between the two sets of BI databases can be omitted when the two sets of BI databases are used, reducing difficulty in maintenance of a BI database. In addition, BI database system complexity can also be effectively reduced in a manner of not using two sets of BI databases.

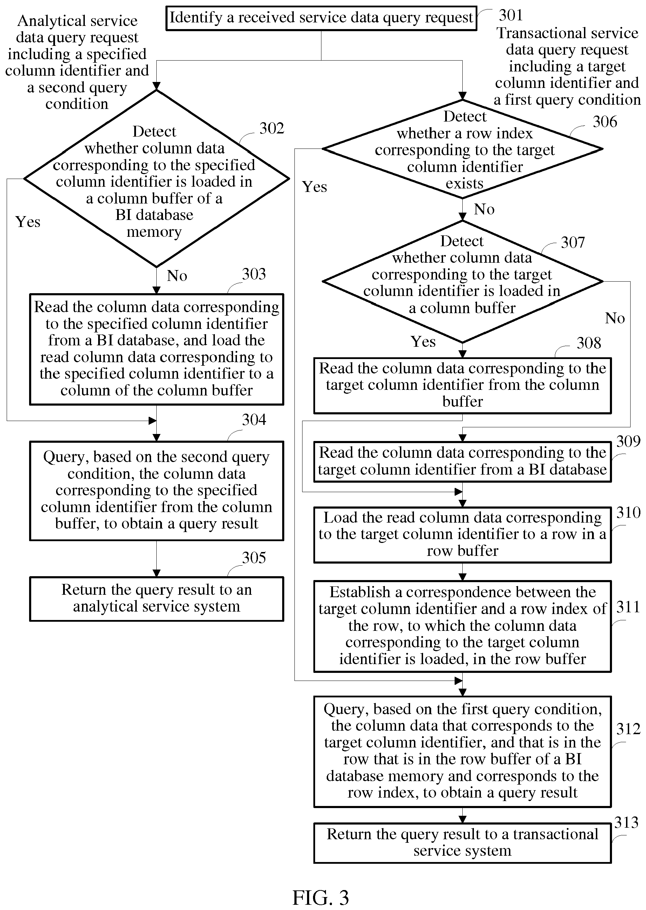

Referring to FIG. 3, FIG. 3 is a schematic flowchart of a method for querying service data according to an embodiment of the present invention. In this embodiment of the present invention, description is made by using an example in which a database is a BI database, and when the database is a database of another type, an implementation of this embodiment of the present invention is not affected. As shown in FIG. 3, the method for querying service data may include the following steps:
301: A BI database system identifies a received service data query request, and when the service data query request is an analytical service data query request that is sent by an analytical service system and that includes a specified column identifier and a second query condition, step 302 is performed, or when the service data query request is a transactional service data query request that is sent by a transactional service system and that includes a target column identifier and a first query condition, step 306 is performed.

In an embodiment, the BI database system may use different ports to receive the analytical service data query request sent by the analytical service system and the transactional service data query request sent by the transactional service system. Further, the BI database system may identify, according to a port by using which a service data query request is received, whether the service data query request is the analytical service data query request that is sent by the analytical service system and that includes the specified column identifier and the second query condition, or is the transactional service data query request that is sent by the transactional service system and that includes the target column identifier and the first query condition.

In another embodiment, the analytical service data query request sent by the analytical service system and the transactional service data query request sent by the transactional service system may separately carry different service type identifiers. Further, the BI database system may identify, according to a service type identifier carried by a received service data query request, whether the service data query request is the analytical service data query request that is sent by the analytical service system and that includes the specified column identifier and the second query condition, or is the transactional service data query request that is sent by the transactional service system and that includes the target column identifier and the first query condition.

In this embodiment of the present invention, the specified column identifier and the target column identifier may also be referred to as customer identifiers because all data of each customer may be used as column data for storage in the BI database.

In this embodiment of the present invention, the first query condition and the second query condition are mainly used to perform querying operations such as filtering and statistics collection on the column data.

302: The BI database system detects whether column data corresponding to the specified column identifier is loaded in a column buffer of a BI database memory, and if not, step 303 is performed, or if yes, step 304 and step 305 are performed.

303: The BI database system reads the column data corresponding to the specified column identifier from a BI database, and loads the read column data corresponding to the specified column identifier to a column of the column buffer, and step 304 and step 305 are performed.

The BI database system may load in advance the column data corresponding to the specified column identifier from the BI database to a column of the column buffer.

304: The BI database system queries, based on the second query condition, the column data corresponding to the specified column identifier from the column buffer, to obtain a query result.

For example, it is assumed that Table 6 and Table 7 are created below in the BI database.

**Table 6 (A name of the table is t1)**

| **Field name (that is, column identifier)** | **Type** |
|---|---|
| attr0 | User Id |
| attr1 | Amount |
| attr2 | Amount |
| attr3 | Amount |
| attr4 | Amount |
| attr5 | Integer |
| attr6 | Integer |
| attr7 | Integer |
| ... | ... |

**Table 7 (A name of the table is t2)**

| **Field name (that is, column identifier)** | **Type** |
|---|---|
| attr0 | User Id |
| f1 | Amount |
| f2 | Amount |
| f3 | Amount |
| f4 | Short |
| f5 | Integer |
| f6 | Integer |
| f7 | Integer |
| f8 | Dict |
| ... | ... |

Table 6 and Table 7 may be stored in a file form, as shown in Table 8:

**Table 8**

| **Field name (that is, column identifier)** | **File type** |
|---|---|
| t1.attr0 | Column data file |
| t1.attr1 | Column data file |
| t1.attr2 | Column data file |
| t1.attr3 | Column data file |
| t1.attr4 | Column data file |
| t1.attr5 | Column data file |
| t1.attr6 | Column data file |
| t1.attr7 | Column data file |
| ... | ... |
| t2.attr0 | Column data file |
| t2.f1 | Column data file |
| t2.f2 | Column data file |
| t2.f3 | Column data file |
| t2.f4 | Column data file |
| t2.f5 | Column data file |
| ... | ... |

Based on Table 6 and Table 7 that are created in the BI database, it is further assumed that the analytical service data query request that is received by the BI database system and that is sent by the analytical service system may include the following second query condition, that is:
select avg(t1.attr1) from t1, t2 where t1.attr0=t2.attr0 and t2.f1>30.5,
where t1.attr1, t1.attr0, t2.attr0, and t2.f1 all represent the specified column identifier, and meaning of the second query condition in an SQL syntax is: when t1 is associated with t2, if column data corresponding to t2.fl is greater than 30.5, an average value of column data corresponding to t1.attr1 is obtained.

Correspondingly, the BI database system may detect whether column data corresponding to t1.attr1, t1.attr0, t2.attr0, and t2.f1 is loaded in the column buffer of the BI database memory, and if yes, queries the column data corresponding to t1.attr1, t1.attr0, t2.attr0, and t2.f1 from the column buffer based on the second query condition, to obtain a query result, or if not, the BI database system reads the column data corresponding to t1.attr1, t1.attr0, t2.attr0, and t2.f1 from the BI database, loads the read column data to a column of the column buffer, and queries, based on the second query condition, the column data corresponding to t1.attr1, t1.attr0, t2.attr0, and t2.f1 from the column buffer, to obtain a query result.

In this embodiment of the present invention, the query result may include various service data, such as a traffic value, a sales value, a sales target, and transaction data.

305: The BI database system returns the query result to the analytical service system, and ends the process.

306: The BI database system detects whether a row index corresponding to the target column identifier exists, and if it is detected that the row index corresponding to the target column identifier does not exist, step 307 is performed, or if it is detected that the row index corresponding to the target column identifier exists, step 312 and step 313 are performed.

307: The BI database system detects whether column data corresponding to the target column identifier is loaded in the column buffer, and if the column data corresponding to the target column identifier is loaded in the column buffer, step 308 is performed, or if the column data corresponding to the target column identifier is not loaded in the column buffer, step 309 is performed.

308: The BI database system reads the column data corresponding to the target column identifier from the column buffer, and step 310 is performed.

309: The BI database system reads the column data corresponding to the target column identifier from the BI database, and step 310 is performed.

310: The BI database system loads the read column data corresponding to the target column identifier to a row in a row buffer.

In this embodiment of the present invention, the row buffer may include several sub-buffers, each sub-buffer includes several rows having a same length, the sub-buffers have a same quantity of rows, and rows of a same rank in the several sub-buffers share a same row index, that is, the rows of a same rank in the several sub-buffers belong to a same row.

Correspondingly, in step 310, a manner in which the BI database system loads the read column data corresponding to the target column identifier to the row in the row buffer may be specifically:
dividing, by the BI database system, according to the quantity of the rows of the sub-buffer in the row buffer, the read column data corresponding to the target column identifier, and loading one by one each partial column data obtained by means of division to a same location of each row included in any one of the sub-buffers.

In this embodiment of the present invention, based on Table 6 and Table 7 that are created in the BI database, it is further assumed that the transactional service data query request that is received by the BI database system and that is sent by the transactional service system may include the following first query condition, that is:
select t1.attr0, t1.attr1, t1.attr2, t1.attr3, t1.attr4, t1.attr5, t1.attr6, t2.f6, t2.f7, t2.f8, t2.f9 from t1, t2 where t1.attr0=t2.attr0 and t1.attr0=?,
where t1.attr0, t1.attr1, t1.attr2, t1.attr3, t1.attr4, t1.attr5, t1.attr6, t2.f6, t2.f7, t2.f8, and t2.f9 represent the target column identifier, and meaning of the first query condition in the SQL syntax is: when t1, t2, and the like are associated, column data corresponding to the target column identifier, such as t1.attr0, t1.attr1, t1.attr2, t1.attr3, t1.attr4, t1.attr5, t1.attr6, t2.f6, t2.f7, t2.f8, and t2.f9 is selected.

Correspondingly, the BI database system may detect whether a row index corresponding to the target column identifier such as t1.attr0, t1.attr1, t1.attr2, t1.attr3, t1.attr4, t1.attr5, t1.attr6, t2.f6, t2.f7, t2.f8, and t2.f9, exists, and if an row index corresponding to t1.attr0 and t2.f6 exists, it indicates that column data corresponding to t1.attr0 and t2.f6 is already loaded to a row of the row buffer, or if an row index corresponding to t1.attr1, t1.attr2, t1.attr3, t1.attr4, t1.attr5, t1.attr6, t2.f7, t2.f8, and t2.f9 does not exist, it indicates that column data corresponding to t1.attr1, t1.attr2, t1.attr3, t1.attr4, t1.attr5, t1.attr6, t2.f7, t2.f8, and t2.f9 is not loaded to a row of the row buffer. Correspondingly, the BI database system may detect whether the column data corresponding to t1.attr1, t1.attr2, t1.attr3, t1.attr4, t1.attr5, t1.attr6, t2.f7, t2.f8, and t2.f9 is loaded in the column buffer, and if the column data corresponding to t1.attr1, t1.attr2, t1.attr3, t1.attr4, t1.attr5, t1.attr6, t2.f7, t2.f8, and t2.f9 is loaded in the column buffer, the BI database system may read the column data corresponding to t1.attr1, t1.attr2, t1.attr3, t1.attr4, t1.attr5, t1.attr6, t2.f7, t2.f8, and t2.f9 from the column buffer, or if the column data corresponding to t1.attr1, t1.attr2, t1.attr3, t1.attr4, t1.attr5, t1.attr6, t2.f7, t2.f8, and t2.f9 is not loaded in the column buffer, the BI database system may read the column data corresponding to t1.attr1, t1.attr2, t1.attr3, t1.attr4, t1.attr5, t1.attr6, t2.f7, t2.f8, and t2.f9 from the BI database. Further, the BI database system may load the read column data corresponding to t1.attr1, t1.attr2, t1.attr3, t1.attr4, t1.attr5, t1.attr6, t2.f7, t2.f8, and t2.f9 to a row in the row buffer (that is, column-to-row conversion).

In this embodiment of the present invention, if storage space of the row buffer is sufficient, but space is insufficient because of a memory fragment, memory defragmentation may be considered. Alternatively, if the storage space of the row buffer is insufficient, a new sub-buffer may be established for the row buffer. When there is a relatively large quantity of sub-buffers in the row buffer (for example, more than three), an operation of combining the sub-buffers is executed.

311: The BI database system establishes a correspondence between the target column identifier and a row index of the row, to which the column data corresponding to the target column identifier is loaded, in the row buffer, and step 312 is performed.

In this embodiment of the present invention, after the BI database system establishes the correspondence between the target column identifier and the row index of the row, to which the column data corresponding to the target column identifier is loaded, in the row buffer, the correspondence may be used to indicate that the column data corresponding to the target column identifier is already loaded to the row of the row buffer. In this way, the BI database system may detect, according to the correspondence, that the row index corresponding to the target column identifier exists next time.

312: The BI database system queries, based on the first query condition, the column data that corresponds to the target column identifier, and that is in the row that is in the row buffer of the BI database memory and corresponds to the row index, to obtain a query result.

In this embodiment of the present invention, in step 312, a manner in which the BI database system queries, based on the first query condition, the column data that corresponds to the target column identifier, and that is in the row that is in the row buffer of the BI database memory and corresponds to the row index, to obtain the query result may be specifically:
determining, by the BI database system, each row that is in the row buffer of the BI database memory and corresponds to the row index and that is located in any one of the sub-buffers, and querying, based on the first query condition, each partial column data that corresponds to the target column identifier, and that is loaded in a same location of each row that is located in any one of the sub-buffers and corresponds to the row index, to obtain the query result.

For example, in this embodiment of the present invention, after all column data corresponding to t1.attr0, t1.attr1, t1.attr2, t1.attr3, t1.attr4, t1.attr5, t1.attr6, t2.f6, t2.f7, t2.f8, and t2.f9 is loaded to a row of the row buffer, and assuming that the row index is 13800138000, the BI database system may determine each row that corresponds to the row index 13800138000 in the row buffer of the BI database memory and that is located in any one of the sub-buffers, and query, based on the first query condition, each partial column data that corresponds to t1.attr0, t1.attr1, t1.attr2, t1.attr3, t1.attr4, t1.attr5, t1.attr6, t2.f6, t2.f7, t2.f8, and t2.f9, and that is located in the same location in each row that is located in any one of the sub-buffers and corresponds to the row index 13800138000, to obtain a query result.

313: The BI database system returns the query result to the transactional service system, and the process ends.

In this embodiment of the present invention, in the method for querying service data shown in FIG. 3, data of a transactional service can be queried in a BI database that stores data in a column manner. In addition, it is unnecessary to create two sets of BI databases for an analytical service and a transactional service, and maintenance of data synchronization between the two sets of BI databases can be omitted when the two sets of BI databases are used, reducing difficulty in maintenance of a BI database. In addition, BI database system complexity can also be effectively reduced in a manner of not using two sets of BI databases.

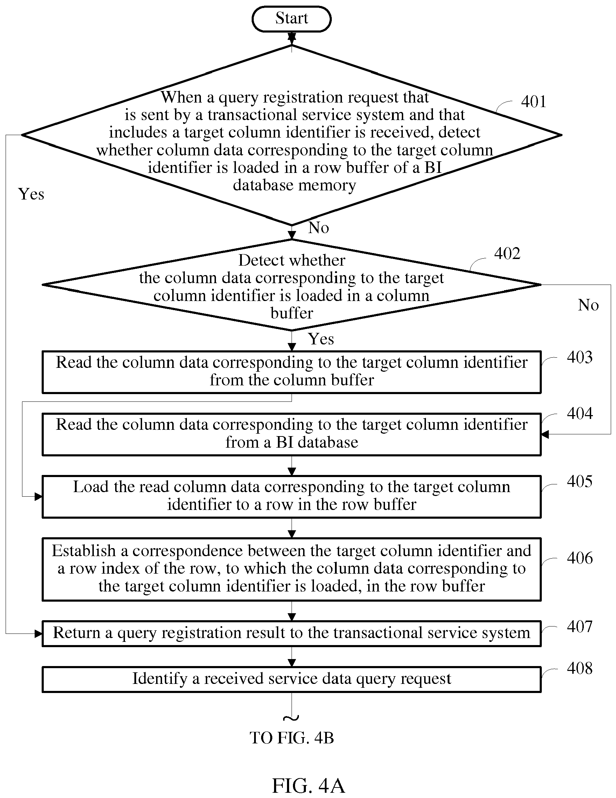

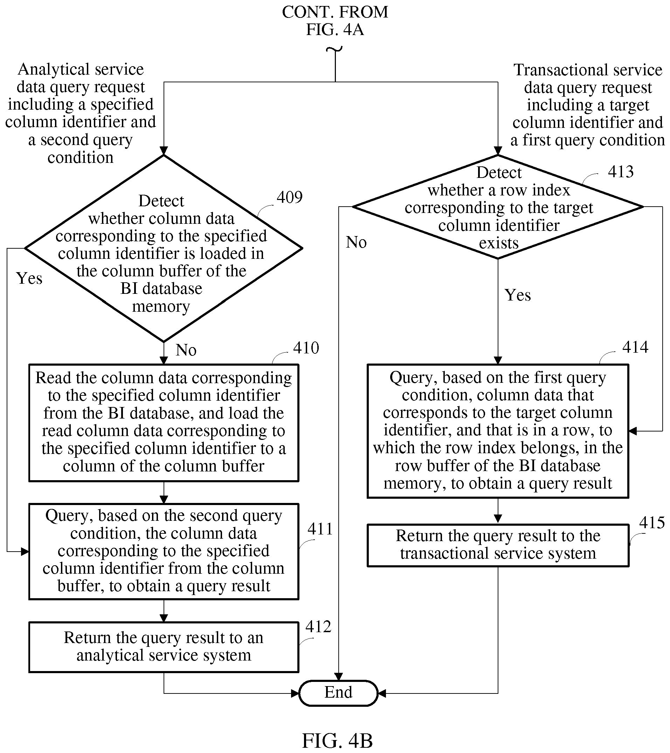

Referring to FIG. 4A and FIG. 4B, FIG. 4A and FIG. 4B are schematic flowcharts of another method for querying service data according to an embodiment of the present invention. In this embodiment of the present invention, description is made by using an example in which a database is a BI database, and when the database is a database of another type, an implementation of this embodiment of the present invention is not affected. In the method for querying service data described in FIG. 4A and FIG. 4B, the BI database system may receive in advance a query registration request sent by a transactional service system, and in response to the query registration request, the BI database system loads in advance column data that is not loaded to a row buffer of a BI database memory to the row buffer, so that the transactional service system subsequently queries data of a transactional service. As shown in FIG. 4A and FIG. 4B, the method for querying service data may include the following steps:
401: When receiving a query registration request that is sent by a transactional service system and that includes a target column identifier, a BI database system detects whether column data corresponding to the target column identifier is loaded in a row buffer of a BI database memory, and if the column data corresponding to the target column identifier is not loaded in the row buffer, step 402 is performed, or if the column data corresponding to the target column identifier is already loaded in the row buffer, step 407 is performed.

For example, the query registration request that is sent by transactional service system, that includes the target column identifier, and that is received by the BI database system may be:
regist query 910 as "select t1.attr0, t1.attr1, t1.attr2, tl.attr3, t1.attr4, t1.attr5, t1.attr6, t2.f6, t2.f7, t2.f8, t2.f9 from t1, t2 where t1.attr0=t2.attr0 and t1.attr0=?",
where t1.attr0, t1.attr1, t1.attr2, t1.attr3, t1.attr4, t1.attr5, t1.attr6, t2.f6, t2.f7, t2.f8, and t2.f9 represent the target column identifier, and the BI database system may detect whether column data corresponding to t1.attr0, t1.attr1, t1.attr2, t1.attr3, t1.attr4, t1.attr5, t1.attr6, t2.f6, t2.f7, t2.f8, and t2.f9 is loaded in the row buffer of the BI database memory, and if not, step 402 is performed, or if yes, step 407 is performed.

402: The BI database system detects whether the column data corresponding to the target column identifier is loaded in a column buffer, and if the column data corresponding to the target column identifier is loaded in the column buffer, step 403 is performed, or if the column data corresponding to the target column identifier is not loaded in the column buffer, step 404 is performed.

403: The BI database system reads the column data corresponding to the target column identifier from the column buffer, and step 405 is performed.

404: The BI database system reads the column data corresponding to the target column identifier from a BI database, and step 405 is performed.

405: The BI database system loads the read column data corresponding to the target column identifier to a row in the row buffer.

In this embodiment of the present invention, the row buffer may include several sub-buffers, each sub-buffer includes several rows having a same length, the sub-buffers have a same quantity of rows, and rows of a same rank in the several sub-buffers share a same row index, that is, the rows of a same rank in the several sub-buffers belong to a same row.

Correspondingly, in step 405, a manner in which the BI database system loads the column data corresponding to the target column identifier to the row in the row buffer may be specifically:
dividing, by the BI database system, according to the quantity of the rows of the sub-buffer in the row buffer, the read column data corresponding to the target column identifier, and loading one by one each partial column data obtained by means of division to a same location of each row included in any one of the sub-buffers.

406: The BI database system establishes a correspondence between the target column identifier and a row index of the row.

407: The BI database system returns a query registration result to the transactional service system.

The query registration result may also be referred to as metadata, and is mainly used to indicate that the column data corresponding to the target column identifier is already loaded in the row buffer.

408: The BI database system identifies a received service data query request, and when the service data query request is an analytical service data query request that is sent by an analytical service system and that includes a specified column identifier and a second query condition, step 409 is performed, or when the service data query request is a transactional service data query request that is sent by a transactional service system and that includes a target column identifier and a first query condition, step 413 is performed.

409: The BI database system detects whether column data corresponding to the specified column identifier is loaded in the column buffer of the BI database memory, and if not, step 410 is performed, or if yes, step 411 to step 412 are performed.

410: The BI database system reads the column data corresponding to the specified column identifier from the BI database, and loads the read column data corresponding to the specified column identifier to a column of the column buffer, and step 411 to step 412 are performed.

411: The BI database system queries, based on the second query condition, the column data corresponding to the specified column identifier from the column buffer, to obtain a query result.

412: The BI database system returns the query result to the analytical service system.

413: The BI database system detects whether a row index corresponding to the target column identifier exists, and if it is detected that the row index corresponding to the target column identifier does not exist, the processing ends, or if it is detected that the row index corresponding to the target column identifier exists, step 414 and step 415 are performed.

The BI database system may detect, according to the correspondence established in step 406, whether the row index corresponding to the target column identifier exists.

414: The BI database system queries, based on the first query condition, the column data corresponding to the target column identifier in the row corresponding to the row index in the row buffer of the BI database memory, to obtain a query result.

In this embodiment of the present invention, in step 414, a manner in which the BI database system queries, based on the first query condition, the column data corresponding to the target column identifier in the row corresponding to the row index in the row buffer of the BI database memory, to obtain the query result may be specifically:
determining, by the BI database system, each row that is in the row buffer of the BI database memory and corresponds to the row index and that is located in any one of the sub-buffers, and querying, based on the first query condition, each partial column data that corresponds to the target column identifier, and that is loaded in a same location of each row that is located in any one of the sub-buffers and corresponds to the row index, to obtain the query result.

415: The BI database system returns the query result to the transactional service system.

In this embodiment of the present invention, in the method for querying service data shown in FIG. 4A and FIG. 4B, data of a transactional service can be queried in a BI database that stores data in a column manner. In addition, it is unnecessary to create two sets of BI databases for an analytical service and a transactional service, and maintenance of data synchronization between the two sets of BI databases can be omitted when the two sets of BI databases are used, reducing difficulty in maintenance of a BI database. In addition, BI database system complexity can also be effectively reduced in a manner of not using two sets of BI databases.

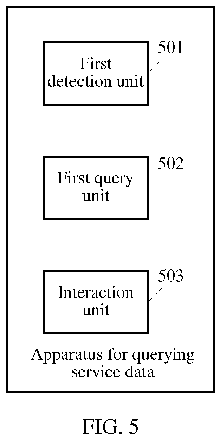

Referring to FIG. 5, FIG. 5 is a schematic structural diagram of an apparatus for querying service data according to an embodiment of the present invention. The apparatus for querying service data shown in FIG. 5 may be configured to perform a function of the database system described above. In this embodiment of the present invention, the database memory includes a column buffer and a row buffer, a column of the column buffer is used to load column data of a database, and a row of the row buffer is used to load column data of the column buffer or the column data of the database. In this embodiment of the present invention, the database may include a BI database (also referred to as a BI data warehouse in the art) storing data in a column manner or another database, for example, a VFP, a dBASE, an oracle, and an SQL storing data in a column manner. This is not limited in this embodiment of the present invention. As shown in FIG. 5, the apparatus for querying service data may include:
a first detection unit 501, configured to: when receiving a transactional service data query request that is sent by a transactional service system and that includes a target column identifier and a first query condition, detect whether a row index corresponding to the target column identifier exists;
a first query unit 502, configured to: when the first detection unit 501 detects that the row index corresponding to the target column identifier exists, query, based on the first query condition, column data that corresponds to the target column identifier, and that is in a row that is in the row buffer and corresponds to the row index, to obtain a query result, and output the result to an interaction unit 503; and
the interaction unit 503, configured to return the query result obtained by the first query unit 502 to the transactional service system.

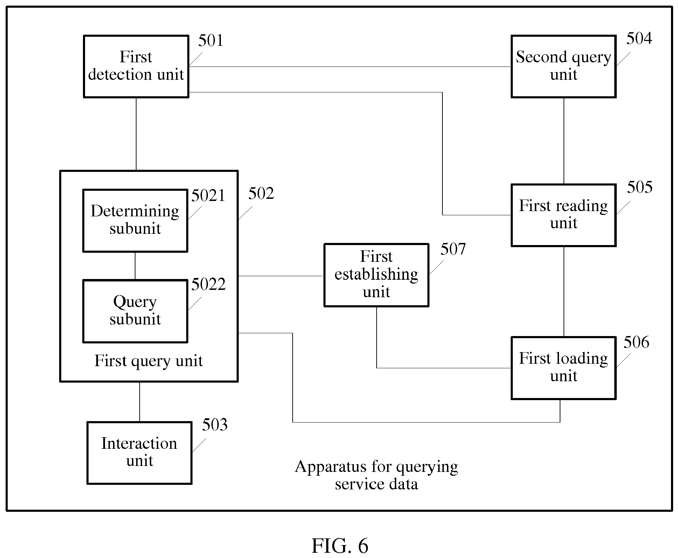

Referring to FIG. 6, FIG. 6 is a schematic structural diagram of another apparatus for querying service data according to an embodiment of the present invention. The apparatus for querying service data shown in FIG. 6 is obtained by optimizing the apparatus for querying service data shown in FIG. 5. Compared with the apparatus for querying service data shown in FIG. 5, the apparatus for querying service data shown in the FIG. 6 may further include:
a second detection unit 504, configured to: when the first detection unit 501 detects that the row index corresponding to the target column identifier does not exist, detect whether the column data corresponding to the target column identifier is loaded in the column buffer;
a first reading unit 505, configured to: when the second detection unit 504 detects that the column data corresponding to the target column identifier is loaded in the column buffer, read the column data corresponding to the target column identifier from the column buffer; and further configured to: when the second detection unit 504 detects that the column data corresponding to the target column identifier is not loaded in the column buffer, read the column data corresponding to the target column identifier from a database;
a first loading unit 506, configured to load the column data that corresponds to the target column identifier and that is read by the first reading unit 505 to a row in the row buffer; and
a first establishing unit 507, configured to establish a correspondence between the target column identifier and a row index of the row (that is, the row, to which the column data corresponding to the target column identifier is loaded, in the row buffer), and trigger the first query unit 502 to execute the operation of querying, based on the first query condition, column data that corresponds to the target column identifier, and that is in a row that is in the row buffer and corresponds to the row index, to obtain a query result.

In the apparatus for querying service data described in FIG. 6, the row buffer may include several sub-buffers, each sub-buffer includes several rows having a same length, the sub-buffers have a same quantity of rows, and rows of a same rank in the several sub-buffers share a same row index, that is, the rows of a same rank in the several sub-buffers belong to a same row. A manner in which the first loading unit 506 loads the read column data corresponding to the target column identifier to the row in the row buffer may be specifically: dividing, by the first loading unit 506, according to the quantity of the rows of the sub-buffer in the row buffer, the read column data corresponding to the target column identifier, and loading one by one each partial column data obtained by means of division to a same location of each row included in any one of the sub-buffers.

Correspondingly, in the apparatus for querying service data described in FIG. 6, the first query unit 502 includes:
a determining subunit 5021, configured to determine each row that is in the row buffer and corresponds to the row index and that is located in any one of the sub-buffers; and
a query subunit 5022, configured to query, based on the first query condition, partial column data that corresponds to the target column identifier, and that is loaded in a same location in each row that is located in any one of the sub-buffers and corresponds to the row index, to obtain the query result.

In this embodiment of the present invention, in the apparatus for querying service data described in FIG. 6:
the first detection unit 501 is further configured to: when receiving an analytical service data query request that is sent by an analytical service system and that includes a specified column identifier and a second query condition, detect whether column data corresponding to the specified column identifier is loaded in the column buffer;
the first query unit 502 is further configured to: when the first detection unit 501 detects that column data corresponding to the specified column identifier is loaded in the column buffer, query, based on the second query condition, the column data corresponding to the specified column identifier from the column buffer, to obtain a query result; and return the result to the interaction unit 503; specifically, the determining subunit 5021 may determine the column data corresponding to the specified column identifier in the column buffer; and the query subunit 5022 may query, based on the second query condition, the column data that corresponds to the specified column identifier from the column buffer and that is determined by the determining subunit 5021, to obtain the query result and output the result to the interaction unit 503;
the first reading unit 505 is further configured to: when the first detection unit 501 detects that the column data corresponding to the specified column identifier is not loaded in the column buffer, read the column data corresponding to the specified column identifier from the database; and
the first loading unit 506 is further configured to: load the column data that corresponds to the specified column identifier and that is read by the first reading unit 505 to a column of the column buffer, and trigger the first query unit 502 to perform the operation of querying, based on the second query condition, the column data corresponding to the specified column identifier from the column buffer, to obtain the query result and output the result to the interaction unit 503.

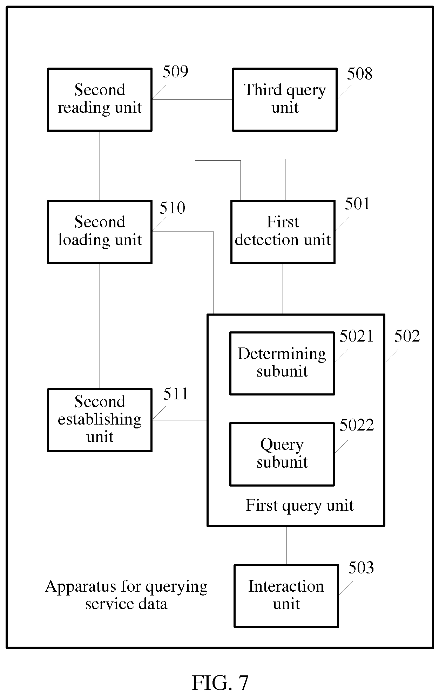

Referring to FIG. 7, FIG. 7 is a schematic structural diagram of another apparatus for querying service data according to an embodiment of the present invention. The apparatus for querying service data shown in FIG. 7 is obtained by optimizing the apparatus for querying service data shown in FIG. 5. Compared with the apparatus for querying service data shown in FIG. 5, the apparatus for querying service data shown in FIG. 7 may further include a third detection unit 508, a second reading unit 509, a second loading unit 510, and a second establishing unit 511, where
the first detection unit 501 is further configured to: before receiving the transactional service data query request that is sent by the transactional service system and that includes the target column identifier and the first query condition, when receiving a query registration request that is sent by the transactional service system and that includes the target column identifier, detect whether the column data corresponding to the target column identifier is loaded in the row buffer;
the third detection unit 508 is configured to: when the first detection unit 501 detects that the column data corresponding to the target column identifier is not loaded in the row buffer, detect whether the column data corresponding to the target column identifier is loaded in the column buffer;
the second reading unit 509 is configured to: when the third detection unit 508 detects that the column data corresponding to the target column identifier is loaded in the column buffer, read the column data corresponding to the target column identifier from the column buffer; and further configured to: when the third detection unit 508 detects that the column data corresponding to the target column identifier is not loaded in the column buffer, read the column data corresponding to the target column identifier from a database;
the second loading unit 510 is configured to load the column data that corresponds to the target column identifier and that is read by the second reading unit 509 to the row in the row buffer; and
the second establishing unit 511 is configured to establish a correspondence between the target column identifier and the row index of the row (that is, the row, to which the column data corresponding to the target column identifier is loaded, in the row buffer).

Correspondingly, when receiving the transactional service data query request that is sent by the transactional service system and that includes the target column identifier and the first query condition, the first detection unit 501 may detect whether the row index corresponding to the target column identifier exists in the correspondence established by the second establishing unit 511.

In the apparatus for querying service data described in FIG. 7, the row buffer may include several sub-buffers, each sub-buffer includes several rows having a same length, the sub-buffers have a same quantity of rows, and rows of a same rank in the several sub-buffers share a same row index, that is, the rows of a same rank in the several sub-buffers belong to a same row. A manner in which the second loading unit 510 loads the read column data corresponding to the target column identifier to the row in the row buffer is specifically: dividing, by the second loading unit 510 according to the quantity of the rows of the sub-buffer in the row buffer, the read column data corresponding to the target column identifier, and loading one by one each partial column data obtained by means of division to a same location of each row included in any one of the sub-buffers.

Correspondingly, in the apparatus for querying service data described in FIG. 7, a first query unit 502 includes:
a determining subunit 5021, configured to determine each row that is in the row buffer and corresponds to the row index and that is located in any one of the sub-buffers; and
a query subunit 5022, configured to query, based on the first query condition, partial column data that corresponds to the target column identifier, and that is loaded in a same location in each row that is located in any one of the sub-buffers and corresponds to the row index, to obtain the query result.

In this embodiment of the present invention, in the apparatus for querying service data described in FIG. 7:
the first detection unit 501 is further configured to: when receiving an analytical service data query request that is sent by an analytical service system and that includes a specified column identifier and a second query condition, detect whether column data corresponding to the specified column identifier is loaded in the column buffer;
the first query unit 502 is further configured to: when the first detection unit 501 detects that column data corresponding to the specified column identifier is loaded in the column buffer, query, based on the second query condition, the column data corresponding to the specified column identifier from the column buffer, to obtain a query result; and return the result to the interaction unit 503; specifically, the determining subunit 5021 may determine the column data corresponding to the specified column identifier in the column buffer; and the query subunit 5022 may query, based on the second query condition, the column data that corresponds to the specified column identifier from the column buffer and that is determined by the determining subunit 5021, to obtain the query result and output the result to the interaction unit 503;
the second reading unit 509 is further configured to: when the first detection unit 501 detects the column data corresponding to the specified column identifier is not loaded in the column buffer, read the column data corresponding to the specified column identifier from the database; and
the second loading unit 510 is further configured to: load the column data that corresponds to the specified column identifier and that is read by the second reading unit 505 to a column of the column buffer, and trigger the first query unit 502 to perform the operation of querying, based on the second query condition, the column data corresponding to the specified column identifier from the column buffer, to obtain the query result and output the result to the interaction unit 503.

In this embodiment of the present invention, in the apparatus for querying service data shown in FIG. 5 to FIG. 7, data of a transactional service can be queried in a database that stores data in a column manner. In addition, it is unnecessary to create two sets of databases for an analytical service and a transactional service, and maintenance of data synchronization between the two sets of databases can be omitted when the two sets of databases are used, reducing difficulty in maintenance of a database. In addition, database system complexity can also be effectively reduced in a manner of not using two sets of databases.

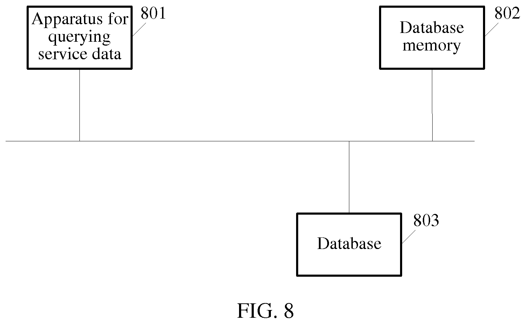

Referring to FIG. 8, FIG. 8 is a schematic structural diagram of a database system according to an embodiment of the present invention. As shown in FIG. 8, the database system may include components, such as an apparatus for querying service data 801, a database memory 802, and a database 803. The components, such as the apparatus for querying service data 801, the BI database memory 802, and the database803, may be connected by using a bus. A structure and a function of the apparatus for querying service data 801 may be the same as a structure and a function of any apparatus for querying service data in FIG. 5 to FIG. 7, and details are not described herein again in this embodiment of the present invention. The database memory 802 may include a column buffer and a row buffer, a column of the column buffer is used to load column data of the database 803, and a row of the row buffer is used to load column data of the column buffer or the column data of the database 803. In this embodiment of the present invention, the database 803 may include a BI database (also referred to as a BI data warehouse in the art) storing data in a column manner or another database, for example, a VFP, a dBASE, an oracle, and an SQL storing data in a column manner. This is not limited in this embodiment of the present invention.

In this embodiment of the present invention, by implementing the system described in FIG. 8, data of a transactional service can be queried in a database that stores data in a column manner. In addition, it is unnecessary to create two sets of databases for an analytical service and a transactional service, and maintenance of data synchronization between the two sets of databases can be omitted when the two sets of databases are used, reducing difficulty in maintenance of a database. In addition, database system complexity can also be effectively reduced in a manner of not using two sets of databases.

The network architecture, the apparatus, the method, and the system that are disclosed in the embodiments of the present invention are described in detail. To better present effects of the present invention, the present invention and some optional solutions are compared below, and a comparison result is shown in Table 9:

**Table 9**

| | **Optional solution 1** | **Optional solution 2** | **The present invention** |
|---|---|---|---|
| **Implem entation principle** | Two databases are used, and a data query of an analytical service and a data query of a transactional service are separately executed | A columnar database is directly used to preferentially meet an analytical service data query requirement, and is also used to execute a data query of a transactional service | In a same set of database, service data may be used in a column or row manner according to a requirement |
| **Service operation manner** | Two types of services need to access two different databases | Two types of services access a same database | Two types of services access a same database, and for a transactional service, a query registration operation may be performed in advance on column data |
| **Actual effect** | Data synchronization is required, maintenance is complex, there are many fault points, an d other costs are also increased | When there is a relatively large quantity of queried columns, performance is deteriorated significantly. For a transactional service, event triggering can be only performed less frequently. Generally, a quantity of queried CAPS does not exceed ten thousand | A query may be performed not only for an analytical service but also for a transactional service. In an actual application, a quantity of CAPS exceeds one million |

A sequence of the steps of the method in the embodiments of the present invention may be adjusted, and certain steps may also be merged and removed according to an actual requirement.

The units or subunits in the terminal or device in the embodiments of the present invention may be adjusted, divided, and removed according to an actual requirement.

A person of ordinary skill in the art may understand that, all or a part of the steps in each method of the foregoing embodiments may be implemented by a program instructing related hardware. The program may be stored in a computer readable storage medium. The storage medium includes a read-only memory (Read-Only Memory, ROM), a random access memory (Random Access Memory, RAM), a programmable read-only memory (Programmable Read-only Memory, PROM), an erasable programmable read-only memory (Erasable Programmable Read Only Memory, EPROM), a one-time programmable read-only memory (One-time Programmable Read-Only Memory, OTPROM), an electrically-erasable programmable read-only memory, (Electrically-Erasable Programmable Read-Only Memory, EEPROM), a compact disc read-only memory (Compact Disc Read-Only Memory, CD-ROM), or another optical disk memory, magnetic disk memory, magnetic tape memory, or any other computer readable medium that can be configured to carry or store data.

The method and apparatus for querying service data and the database system disclosed in the embodiments of the present invention are described above in detail. Although the principles and implementation manners of the present invention are described by using specific embodiments in this specification, the foregoing descriptions of the embodiments are only intended to help understand the method and core idea of the method of the present invention. Meanwhile, a person of ordinary skill in the art may make modifications to the specific implementation manners and application range according to the idea of the present invention. In conclusion, the content of the specification should not be construed as a limitation to the present invention. corresponding to the target column identifier, and loading one by one each partial column data obtained by means of division to a same location of each row included in any one of the sub-buffers.

Correspondingly, in the apparatus for querying service data described in FIG. 7, a first query unit 502 includes:
a determining subunit 5021, configured to determine each row that is in the row buffer and corresponds to the row index and that is located in any one of the sub-buffers; and
a query subunit 5022, configured to query, based on the first query condition, partial column data that corresponds to the target column identifier, and that is loaded in a same location in each row that is located in any one of the sub-buffers and corresponds to the row index, to obtain the query result.

In this embodiment of the present invention, in the apparatus for querying service data described in FIG. 7:
the first detection unit 501 is further configured to: when receiving an analytical service data query request that is sent by an analytical service system and that includes a specified column identifier and a second query condition, detect whether column data corresponding to the specified column identifier is loaded in the column buffer;
the first query unit 502 is further configured to: when the first detection unit 501 detects that column data corresponding to the specified column identifier is loaded in the column buffer, query, based on the second query condition, the column data corresponding to the specified column identifier from the column buffer, to obtain a query result; and return the result to the interaction unit 503; specifically, the determining subunit 5021 may determine the column data corresponding to the specified column identifier in the column buffer; and the query subunit 5022 may query, based on the second query condition, the column data that corresponds to the specified column identifier from the column buffer and that is determined by the determining subunit 5021, to obtain the query result and output the result to the interaction unit 503;
the second reading unit 509 is further configured to: when the first detection unit 501 detects the column data corresponding to the specified column identifier is not loaded in the column buffer, read the column data corresponding to the specified column identifier from the database; and
the second loading unit 510 is further configured to: load the column data that corresponds to the specified column identifier and that is read by the second reading unit 505 to a column of the column buffer, and trigger the first query unit 502 to perform the operation of querying, based on the second query condition, the column data corresponding to the specified column identifier from the column buffer, to obtain the query result and output the result to the interaction unit 503.

In this embodiment of the present invention, in the apparatus for querying service data shown in FIG. 5 to FIG. 7, data of a transactional service can be queried in a database that stores data in a column manner. In addition, it is unnecessary to create two sets of databases for an analytical service and a transactional service, and maintenance of data synchronization between the two sets of databases can be omitted when the two sets of databases are used, reducing difficulty in maintenance of a database. In addition, database system complexity can also be effectively reduced in a manner of not using two sets of databases.

Referring to FIG. 8, FIG. 8 is a schematic structural diagram of a database system according to an embodiment of the present invention. As shown in FIG. 8, the database system may include components, such as an apparatus for querying service data 801, a database memory 802, and a database 803. The components, such as the apparatus for querying service data 801, the BI database memory 802, and the database803, may be connected by using a bus. A structure and a function of the apparatus for querying service data 801 may be the same as a structure and a function of any apparatus for querying service data in FIG. 5 to FIG. 7, and details are not described herein again in this embodiment of the present invention. The database memory 802 may include a column buffer and a row buffer, a column of the column buffer is used to load column data of the database 803, and a row of the row buffer is used to load column data of the column buffer or the column data of the database 803. In this embodiment of the present invention, the database 803 may include a BI database (also referred to as a BI data warehouse in the art) storing data in a column manner or another database, for example, a VFP, a dBASE, an oracle, and an SQL storing data in a column manner. This is not limited in this embodiment of the present invention.

In this embodiment of the present invention, by implementing the system described in FIG. 8, data of a transactional service can be queried in a database that stores data in a column manner. In addition, it is unnecessary to create two sets of databases for an analytical service and a transactional service, and maintenance of data synchronization between the two sets of databases can be omitted when the two sets of databases are used, reducing difficulty in maintenance of a database. In addition, database system complexity can also be effectively reduced in a manner of not using two sets of databases.

The network architecture, the apparatus, the method, and the system that are disclosed in the embodiments of the present invention are described in detail. To better present effects of the present invention, the present invention and some optional solutions are compared below, and a comparison result is shown in Table 9:

**Table 9**

| | **Optional solution 1** | **Optional solution 2** | **The present invention** |
|---|---|---|---|
| **Implementa tion principle** | Two databases are used, and a data query of an analytical service and a data query of a transactional service are separately executed | A columnar database is directly used to preferentially meet an analytical service data query requirement, and is also used to execute a data query of a transactional service | In a same set of database, service data may be used in a column or row manner according to a requirement |
| **Service operation manner** | Two types of services need to access two different databases | Two types of services access a same database | Two types of services access a same database, and for a transactional service, a query registration operation may be performed in advance on column data |
| **Actual effect** | Data synchronization is required, maintenance is complex, there are many fault points, and other costs are also increased | When there is a relatively large quantity of queried columns, performance is deteriorated significantly. For a transactional service, event triggering can be only performed less frequently. Generally, a quantity of queried CAPS does not exceed ten thousand | A query may be performed not only for an analytical service but also for a transactional service. In an actual application, a quantity of CAPS exceeds one million |

A sequence of the steps of the method in the embodiments of the present invention may be adjusted, and certain steps may also be merged and removed according to an actual requirement.

The units or subunits in the terminal or device in the embodiments of the present invention may be adjusted, divided, and removed according to an actual requirement.

A person of ordinary skill in the art may understand that, all or a part of the steps in each method of the foregoing embodiments may be implemented by a program instructing related hardware. The program may be stored in a computer readable storage medium. The storage medium includes a read-only memory (Read-Only Memory, ROM), a random access memory (Random Access Memory, RAM), a programmable read-only memory (Programmable Read-only Memory, PROM), an erasable programmable read-only memory (Erasable Programmable Read Only Memory, EPROM), a one-time programmable read-only memory (One-time Programmable Read-Only Memory, OTPROM), an electrically-erasable programmable read-only memory, (Electrically-Erasable Programmable Read-Only Memory, EEPROM), a compact disc read-only memory (Compact Disc Read-Only Memory, CD-ROM), or another optical disk memory, magnetic disk memory, magnetic tape memory, or any other computer readable medium that can be configured to carry or store data.

The method and apparatus for querying service data and the database system disclosed in the embodiments of the present invention are described above in detail. Although the principles and implementation manners of the present invention are described by using specific embodiments in this specification, the foregoing descriptions of the embodiments are only intended to help understand the method and core idea of the method of the present invention. Meanwhile, a person of ordinary skill in the art may make modifications to the specific implementation manners and application range according to the idea of the present invention. In conclusion, the content of the specification should not be construed as a limitation to the present invention.

## Claims

1. A method for querying service data, wherein a database memory comprises a column buffer and a row buffer, wherein a column of the column buffer is used to load column data of a database, a row of the row buffer is used to load column data of the column buffer or the column data of the database, and the method comprises:
receiving (401) a transactional service data query request that is sent by a transactional service system and that comprises a target column identifier and a first query condition,
detecting (401) whether a row index corresponding to the target column identifier exists; and
if the row index corresponding to the target column identifier exists, querying, based on the first query condition, column data that corresponds to the target column identifier, and that is in a row in the row buffer and corresponds to the row index, to obtain a query result; and returning (407) the result to the transactional service system;
if the row index corresponding to the target column identifier does not exist, detecting (402) whether the column data corresponding to the target column identifier is loaded in the column buffer, and if the column data corresponding to the target column identifier is loaded in the column buffer, reading (403) the column data corresponding to the target column identifier from the column buffer; if the column data corresponding to the target column identifier is not loaded in the column buffer, reading (404) the column data corresponding to the target column identifier from the database; loading (405) the read column data corresponding to the target column identifier to a row in the row buffer; and
establishing (406) a correspondence between the target column identifier and a row index of the row, and querying, based on the first query condition, the row in the row buffer containing the column data, to obtain a query result; and returning (407) the result to the transactional service system;
wherein the row buffer comprises several sub-buffers, each sub-buffer comprises several rows having a same length, the sub-buffers have a same quantity of rows, and for each i between 1 and the quantity of rows in a sub-buffer, the i^{th} row in a sub-buffer shares a same row index with the i^{th} row in every other sub-buffer; and the loading the read column data corresponding to the target column identifier to a row in the row buffer comprises:
dividing, according to the quantity of the rows of the sub-buffer in the row buffer, the read column data corresponding to the target column identifier, and loading one by one each partial column data obtained by means of division to a same location in each row comprised in any one of the sub-buffers.

2. The method according to claim 1, wherein before the receiving a transactional service data query request that is sent by a transactional service system and that comprises a target column identifier and a first query condition, the method further comprises:
when receiving a query registration request that is sent by the transactional service system and that comprises the target column identifier, detecting whether the column data corresponding to the target column identifier is loaded in the row buffer; if the column data corresponding to the target column identifier is not loaded in the row buffer, detecting whether the column data corresponding to the target column identifier is loaded in the column buffer; and if the column data corresponding to the target column identifier is loaded in the column buffer, reading the column data corresponding to the target column identifier from the column buffer, or if the column data corresponding to the target column identifier is not loaded in the column buffer, reading the column data corresponding to the target column identifier from the database;
loading the read column data corresponding to the target column identifier to a row in the row buffer; and
establishing a correspondence between the target column identifier and a row index of the row.

3. The method according to claim 1, wherein the querying, based on the first query condition, column data that corresponds to the target column identifier, and that is in a row that is in the row buffer and corresponds to the row index, to obtain a query result comprises:
determining each row that is in the row buffer and corresponds to the row index and that is located in any one of the sub-buffers; and
querying, based on the first query condition, each partial column data that corresponds to the target column identifier, and that is loaded in a same location in each row that is located in any one of the sub-buffers and corresponds to the row index, to obtain the query result.

4. The method according to claim 1, the method further comprises:
when receiving an analytical service data query request that is sent by an analytical service system and that comprises a specified column identifier and a second query condition, detecting (409) whether column data corresponding to the specified column identifier is loaded in the column buffer, and if the column data corresponding to the specified column identifier is loaded in the column buffer, querying (411), based on the second query condition, the column data that is corresponding to the specified column identifier and that is in the column buffer, to obtain a query result and returning (412) the result to the analytical service system.

5. The method according to claim 4, wherein if the column data corresponding to the specified column identifier is not loaded in the column buffer, the method further comprises:
reading (410) the column data corresponding to the specified column identifier from the database; and
loading (410) the read column data corresponding to the specified column identifier to a column of the column buffer, and performing the step of querying, based on the second query condition, the column data corresponding to the specified column identifier from the column buffer, to obtain a query result; and returning the result to the analytical service system.

6. An apparatus for querying service data, comprising:
a transceiver;
a database and a database memory comprising a column buffer and a row buffer,
one or more processors; and
non-transitory computer-readable memory storing a program to be executed by the one or more processors for performing the method claims 1-5.

## Patentansprüche

1. Verfahren zum Abfragen von Servicedaten, wobei ein Datenbankspeicher einen Spaltenpuffer und einen Zeilenpuffer umfasst, wobei eine Spalte des Spaltenpuffers zum Laden von Spaltendaten einer Datenbank verwendet wird, eine Zeile des Zeilenpuffers zum Laden von Spaltendaten des Spaltenpuffers oder der Spaltendaten der Datenbank verwendet wird, und das Verfahren umfasst:
Empfangen (401) einer Transaktions-Servicedatenabfrageanforderung, die von einem Transaktions-Servicesystem gesendet wird und die eine Zielspaltenkennung und eine erste Abfragebedingung umfasst,
Erkennen (401), ob ein Zeilenindex, der der Zielspaltenkennung entspricht, vorhanden ist; und
wenn der Zeilenindex, der der Zielspaltenkennung entspricht, vorhanden ist, Abfragen, auf der Grundlage der ersten Abfragebedingung, von Spaltendaten, die der Zielspaltenkennung entsprechen und die sich in einer Zeile im Zeilenpuffer befinden und dem Zeilenindex entsprechen, um ein Abfrageergebnis zu erhalten; und Zurückgeben (407) des Ergebnisses an das Transaktions-Servicesystem;
wenn der Zeilenindex, der der Zielspaltenkennung entspricht, nicht vorhanden ist, Erkennen (402), ob die Spaltendaten, die der Zielspaltenkennung entsprechen, in den Spaltenpuffer geladen sind, und wenn die Spaltendaten, die der Zielspaltenkennung entsprechen, in den Spaltenpuffer geladen sind, Lesen (403) der Spaltendaten, die der Zielspaltenkennung entsprechen, aus dem Spaltenpuffer; wenn die Spaltendaten, die der Zielspaltenkennung entsprechen, nicht in den Spaltenpuffer geladen sind, Lesen (404) der Spaltendaten, die der Zielspaltenkennung entsprechen, aus der Datenbank; Laden (405) der gelesenen Spaltendaten, die der Zielspaltenkennung entsprechen, in eine Zeile im Zeilenpuffer; und
Herstellen (406) einer Übereinstimmung zwischen der Zielspaltenkennung und einem Zeilenindex der Zeile und Abfragen, auf der Grundlage der ersten Abfragebedingung, der Zeile im Zeilenpuffer, die die Spaltendaten enthält, um ein Abfrageergebnis zu erhalten; und Zurückgeben (407) des Ergebnisses an das Transaktions-Services ystem;
wobei der Zeilenpuffer mehrere Unterpuffer umfasst, jeder Unterpuffer mehrere Zeilen mit gleicher Länge umfasst, die Unterpuffer eine gleiche Anzahl von Zeilen aufweisen und für jedes i zwischen 1 und der Anzahl von Zeilen in einem Unterpuffer die i-te Zeile in einem Unterpuffer einen gleichen Zeilenindex mit der i-ten Zeile in jedem anderen Unterpuffer teilt; und wobei das Laden der gelesenen Spaltendaten, die der Zielspaltenkennung entsprechen, in eine Zeile im Zeilenpuffer umfasst:
Aufteilen, entsprechend der Anzahl der Zeilen des Unterpuffers im Zeilenpuffer, der gelesenen Spaltendaten, die der Zielspaltenkennung entsprechen, und nacheinander Laden jeder durch Aufteilen erhaltenen Teilspaltendaten an eine gleiche Stelle in jeder Zeile, die in einem beliebigen der Unterpuffer enthalten ist.

2. Verfahren nach Anspruch 1, wobei das Verfahren vor dem Empfangen einer Transaktions-Servicedatenabfrageanforderung, die von einem Transaktions-Servicesystem gesendet wird und die eine Zielspaltenkennung und eine erste Abfragebedingung umfasst, ferner umfasst:
beim Empfang einer Abfrageregistrierungsanforderung, die vom Transaktions-Servicesystem gesendet wird und die die Zielspaltenkennung umfasst, Erkennen, ob die der Zielspaltenkennung entsprechenden Spaltendaten in den Zeilenpuffer geladen sind; wenn die der Zielspaltenkennung entsprechenden Spaltendaten nicht in den Zeilenpuffer geladen sind, Erkennen, ob die der Zielspaltenkennung entsprechenden Spaltendaten in den Spaltenpuffer geladen sind; und wenn die der Zielspaltenkennung entsprechenden Spaltendaten in den Spaltenpuffer geladen sind, Lesen der der Zielspaltenkennung entsprechenden Spaltendaten aus dem Spaltenpuffer, oder wenn die der Zielspaltenkennung entsprechenden Spaltendaten nicht in den Spaltenpuffer geladen sind, Lesen der der Zielspaltenkennung entsprechenden Spaltendaten aus der Datenbank;
Laden der gelesenen Spaltendaten, die der Zielspaltenkennung entsprechen, in eine Zeile im Zeilenpuffer; und
Herstellen einer Übereinstimmung zwischen der Zielspaltenkennung und einem Zeilenindex der Zeile.

3. Verfahren nach Anspruch 1, wobei das Abfragen, auf der Grundlage der ersten Abfragebedingung, von Spaltendaten, die der Zielspaltenkennung entsprechen und die sich in einer Zeile befinden, die sich im Zeilenpuffer befindet und die dem Zeilenindex entspricht, zum Erhalten eines Abfrageergebnisses umfasst:
Bestimmen jeder Zeile, die sich im Zeilenpuffer befindet und die dem Zeilenindex entspricht und die sich in einem beliebigen der Unterpuffer befindet; und
Abfragen, auf der Grundlage der ersten Abfragebedingung, jeder Teilspaltendaten, die der Zielspaltenkennung entsprechen und die an die gleiche Stelle in jeder Zeile geladen sind, die sich in einem beliebigen der Unterpuffer befindet und dem Zeilenindex entspricht, um das Abfrageergebnis zu erhalten.

4. Verfahren nach Anspruch 1, wobei das Verfahren ferner umfasst:
beim Empfang einer Abfrageanforderung für Analyse-Servicedaten, die von einem Analyse-Servicesystem gesendet wird und die eine spezifizierte Spaltenkennung und eine zweite Abfragebedingung umfasst, Erkennen (409), ob Spaltendaten, die der spezifizierten Spaltenkennung entsprechen, in den Spaltenpuffer geladen sind, und wenn die Spaltendaten, die der spezifizierten Spaltenkennung entsprechen, in den Spaltenpuffer geladen sind, Abfragen (411), auf der Grundlage der zweiten Abfragebedingung, der Spaltendaten, die der spezifizierten Spaltenkennung entsprechen und die sich im Spaltenpuffer befinden, um ein Abfrageergebnis zu erhalten, und Zurückgeben (412) des Ergebnisses an das Analyse-Servicesystem.

5. Verfahren nach Anspruch 4, wobei, wenn die Spaltendaten, die der spezifizierten Spaltenkennung entsprechen, nicht in den Spaltenpuffer geladen sind, das Verfahren ferner umfasst:
Lesen (410) der Spaltendaten, die der spezifizierten Spaltenkennung entsprechen, aus der Datenbank; und
Laden (410) der gelesenen Spaltendaten, die der spezifizierten Spaltenkennung entsprechen, in eine Spalte des Spaltenpuffers und Ausführen des Schritts des Abfragens, auf der Grundlage der zweiten Abfragebedingung, der Spaltendaten, die der spezifizierten Spaltenkennung entsprechen, aus dem Spaltenpuffer, um ein Abfrageergebnis zu erhalten; und Zurückgeben des Ergebnisses an das Analyse-Servicesystem.

6. Vorrichtung zum Abfragen von Servicedaten, umfassend:
einen Sender-Empfänger;
eine Datenbank und einen Datenbankspeicher, umfassend einen Spaltenpuffer und einen Zeilenpuffer,
einen oder mehrere Prozessoren; und
nichtflüchtiger computerlesbarer Speicher, der ein Programm speichert, das von einem oder von mehreren Prozessoren zum Durchführen des Verfahrens nach den Ansprüchen 1-5 auszuführen ist.

## Revendications

1. Procédé d'interrogation de données de service, dans lequel une mémoire de base de données comprend un tampon de colonne et un tampon de rangée, une colonne du tampon de colonne étant utilisée pour charger des données de colonne d'une base de données, une rangée du tampon de rangée étant utilisée pour charger des données de colonne du tampon de colonne ou des données de colonne de la base de données, et le procédé consistant à :
recevoir (401) une requête d'interrogation de données de service transactionnel qui est envoyée par un système de service transactionnel et qui comprend un identifiant de colonne cible et une première condition d'interrogation,
détecter (401) si un indice de rangée correspondant à l'identifiant de colonne cible existe ; et
si l'indice de rangée correspondant à l'identifiant de colonne cible existe, interroger, sur la base de la première condition d'interrogation, des données de colonne qui correspondent à l'identifiant de colonne cible, et qui se trouvent dans une rangée dans le tampon de rangée et correspondent à l'indice de rangée, pour obtenir un résultat d'interrogation ; et retourner (407) le résultat au système de service transactionnel ;
si l'indice de rangée correspondant à l'identifiant de colonne cible n'existe pas, détecter (402) si les données de colonne correspondant à l'identifiant de colonne cible sont chargées dans le tampon de colonne, et si les données de colonne correspondant à l'identifiant de colonne cible sont chargées dans le tampon de colonne, lire (403) les données de colonne correspondant à l'identifiant de colonne cible à partir du tampon de colonne ; si les données de colonne correspondant à l'identifiant de colonne cible ne sont pas chargées dans le tampon de colonne, lire (404) les données de colonne correspondant à l'identifiant de colonne cible à partir de la base de données ; charger (405) les données de colonne lues correspondant à l'identifiant de colonne cible sur une rangée dans le tampon de rangée ; et
établir (406) une correspondance entre l'identifiant de colonne cible et un indice de rangée de la rangée, et interroger, sur la base de la première condition d'interrogation, la rangée dans le tampon de rangée contenant les données de colonne, pour obtenir un résultat d'interrogation ; et retourner (407) le résultat au système de service transactionnel ;
dans lequel le tampon de rangée comprend plusieurs sous-tampons, chaque sous-tampon comprend plusieurs rangées ayant une même longueur, les sous-tampons ont une même quantité de rangées, et pour chaque i entre 1 et la quantité de rangées dans un sous-tampon, la i^{e} rangée dans un sous-tampon partage un même indice de rangée avec la i^{e} rangée dans chaque autre sous-tampon ; et le chargement des données de colonne lues correspondant à l'identifiant de colonne cible sur une rangée dans le tampon de rangée consiste à :
diviser, en fonction de la quantité des rangées du sous-tampon dans le tampon de rangée, les données de colonne lues correspondant à l'identifiant de colonne cible, et charger une par une chacune des données de colonne partielle obtenues au moyen d'une division à un même emplacement dans chaque rangée comprise dans n'importe lequel des sous-tampons.

2. Procédé selon la revendication 1, dans lequel avant la réception d'une requête d'interrogation de données de service transactionnel qui est envoyée par un système de service transactionnel et qui comprend un identifiant de colonne cible et une première condition d'interrogation, le procédé consiste en outre à :
lors de la réception d'une requête d'enregistrement d'interrogation qui est envoyée par le système de service transactionnel et qui comprend l'identifiant de colonne cible, détecter si les données de colonne correspondant à l'identifiant de colonne cible sont chargées dans le tampon de rangée ; si les données de colonne correspondant à l'identifiant de colonne cible ne sont pas chargées dans le tampon de rangée, détecter si les données de colonne correspondant à l'identifiant de colonne cible sont chargées dans le tampon de colonne ; et si les données de colonne correspondant à l'identifiant de colonne cible sont chargées dans le tampon de colonne, lire les données de colonne correspondant à l'identifiant de colonne cible à partir du tampon de colonne, ou si les données de colonne correspondant à l'identifiant de colonne cible ne sont pas chargées dans le tampon de colonne, lire les données de colonne correspondant à l'identifiant de colonne cible à partir de la base de données ;
charger les données de colonne lues correspondant à l'identifiant de colonne cible sur une rangée dans le tampon de rangée ; et
établir une correspondance entre l'identifiant de colonne cible et un indice de rangée de la rangée.

3. Procédé selon la revendication 1, dans lequel l'interrogation, sur la base de la première condition d'interrogation, des données de colonne qui correspondent à l'identifiant de colonne cible et qui se trouvent dans une rangée qui est dans le tampon de rangée et correspond à l'indice de rangée, pour obtenir un résultat d'interrogation, consiste à :
déterminer chaque rangée qui est dans le tampon de rangée et correspond à l'indice de rangée et qui est située dans n'importe lequel des sous-tampons ; et
interroger, sur la base de la première condition d'interrogation, chacune des données de colonne partielle qui correspondent à l'identifiant de colonne cible, et qui sont chargées dans un même emplacement dans chaque rangée qui est située dans n'importe lequel des sous-tampons et correspond à l'indice de rangée, pour obtenir le résultat d'interrogation.

4. Procédé selon la revendication 1, le procédé consistant en outre à :
lors de la réception d'une requête d'interrogation de données de service analytique qui est envoyée par un système de service analytique et qui comprend un identifiant de colonne spécifié et une seconde condition d'interrogation, détecter (409) si les données de colonne correspondant à l'identifiant de colonne spécifié sont chargées dans le tampon de colonne, et si les données de colonne correspondant à l'identifiant de colonne spécifié sont chargées dans le tampon de colonne, interroger (411), sur la base de la seconde condition d'interrogation, les données de colonne qui correspondent à l'identifiant de colonne spécifié et qui se trouvent dans le tampon de colonne, pour obtenir un résultat d'interrogation et retourner (412) le résultat au système de service analytique.

5. Procédé selon la revendication 4, dans lequel si les données de colonne correspondant à l'identifiant de colonne spécifié ne sont pas chargées dans le tampon de colonne, le procédé consiste en outre à :
lire (410) les données de colonne correspondant à l'identifiant de colonne spécifié à partir de la base de données ; et
charger (410) les données de colonne lues correspondant à l'identifiant de colonne spécifié sur une colonne du tampon de colonne, et mettre en œuvre l'étape d'interrogation, sur la base de la seconde condition d'interrogation, des données de colonne correspondant à l'identifiant de colonne spécifié à partir du tampon de colonne, pour obtenir un résultat d'interrogation ; et retourner le résultat au système de service analytique.

6. Appareil d'interrogation de données de service, comprenant :
un émetteur-récepteur ;
une base de données et une mémoire de base de données comprenant un tampon de colonne et un tampon de rangée,
un ou plusieurs processeurs ; et
une mémoire lisible par ordinateur non transitoire stockant un programme devant être exécuté par le ou les processeurs pour mettre en œuvre les revendications 1 à 5 du procédé.
